## Europäisches Patentamt
## European Patent Office
## Office européen des brevets

(19)

(11) Publication number: **0 164 912**
A2

(12)
# EUROPEAN PATENT APPLICATION

(21) Application number: **85303372.8**

(22) Date of filing: **14.05.85**

(51) Int. Cl.⁴: **B 29 C 47/88**

(30) Priority: **15.05.84 GB 8412387**

(43) Date of publication of application:
**18.12.85 Bulletin 85/51**

(84) Designated Contracting States:
**AT DE FR GB IT**

(71) Applicant: **EXTRUSION SYSTEMS LIMITED**
**West Street**
**Drighlington Bradford, BD11 1BP West Yorkshire(GB)**

(72) Inventor: **Slack, Ian David The Old Vicarage**
**32 Back Lane Drighlington**
**Bradford, BD11 1LS West Yorkshire(GB)**

(74) Representative: **Stringer, David Hiram et al,**
**W.P. THOMPSON & CO Coopers Building Church Street**
**Liverpool L1 3AB(GB)**

(54) **Method of and apparatus for cooling plastics films or sheets.**

(57) The present specification discloses a method and apparatus for use in the production of plastics film and sheet. A well know system for producing thermoplastics film and sheet comprises the cooling of a molten film by casting the material onto the surface of a rotating metal drum (1). The drum (1) is cooled by passing, for example, water through the hollow interior of the drum. The cooling water is circulated by passageways in the drum (1). If sufficient heat is not conveyed away by the water then the plastics material will stick to the drum (1). The problem arises in that a boundary layer of warm water tends to stay adjacent to the inside wall (21) of the drum (1), acting as a barrier to further heat transfer. This thus impedes the allowable speed of production.

The present invention provides for the cooling fluid to be atomised and sprayed at high velocity onto the inside wall (21) of the drum (1), the sprayed fluid breaking up the boundary layer (25) and enhancing the cooling effect. Further, the cooling fluid collected at the bottom of the preferably horizontal drum (1), is pumped away continuously to further enhance the cooling effect. This improved cooling allows for higher speed production as compared to prior art arrangements.

EP 0 164 912 A2

DESCRIPTION

IMPROVEMENTS RELATING TO THE PRODUCTION OF
PLASTICS FILM AND SHEET.

The present invention relates to a method of cooling for use in the production of plastics film and sheet, and apparatus for use in said method.

A well known system for producing thermoplastic film and sheet comprises the cooling of a molten film of thermoplastic material by casting the film onto the surface of a rotating metal drum. The drum is cooled by passing water or other suitable fluid through the hollow interior of the drum. The cooling water is circulated inside the drum by passageways through the shafts supporting the drum. As the plastics film solidifies, heat is released which passes through the metal walls of the drum and into the water inside.

A problem which affects the efficiency of such a system and hence the output of any particular machine, is the amount of heat that can be dissipated through the wall of the cooling drum and transferred into the water inside the drum. For each type of thermoplastic material, there is a critical temperature for the surface of the drum which if exceeded causes the plastics film to stick to the surface of the drum, thereby rendering the process unworkable.

The major problem affecting the transfer of heat on such a cooling drum occurs at the interface of the inner surface of the drum wall and the cooling water itself. It is a well known fact that a boundary layer of warm water clings to the inner surface of the drum by means of surface tension. This boundary layer of water remains in contact with the inner surface of the drum and rotates with it, the boundary layer acting as an insulation layer between the inner wall and the bulk of the water in the drum. The main volume of water in the drum merely slides over the boundary layer without absorbing heat. This boundary layer is known to cause a large loss of cooling efficiency. Many methods have been used to minimise the boundary layer affect and these have in the main been attempts to create turbulence in the cooling water to cause it to mix with and displace the water in the boundary layer. However, this resulted in only small increases of efficiency and often at the expense of creating a temperature gradient along the surface of the drum.

The aim of the present invention is to provide a method and apparatus for use in the production of plastics film or sheet, wherein cooling efficiency is improved, and thus the rate of output is increased.

According to the present invention there is provided a method of cooling plastics material, for use in the production of plastics film and sheet, said method comprising the step of casting molten plastics material onto a hollow rotating cooling drum wherein cooling fluid is atomised and sprayed onto the inside wall of the hollow drum.

Preferably, the cooling fluid is water, which is sprayed in the form of fine particles travelling at high velocity, at approximately 90 degrees to the inner surface of the drum. The particles of colder dense water moving at high velocity easily penetrate the boundary layer of water and spread out on the inner surface of the drum. The boundary layer of hot water is thus displaced and falls away from the surface.

An additional advantage of this system utilises the latent heat of vapourisation. It has been noticed that with this cooling system in operation, and before the hot plastics film is applied, the temperature of the outer surface of the drum is several degrees cooler than the temperature of the cooling water entering the drum. During the atomisation of the water some of the particles of water evaporate, thereby absorbing the latent heat of vapourisation. It has further been found that the system operates at maximum efficiency if water in the bottom of the drum is kept to a minimum by utilising a pump to remove it.

According to a further aspect of the present invention, there is provided a cooling drum for use in the production of plastics film and sheet, said drum being cylindrical and being mounted for rotation about its central axis, spraying means provided within the drum being adapted to atomise and spray cooling fluid on the inside wall of the rotatable drum.

In a preferred embodiment of this further aspect of the present invention, the hollow drum is rotatably mounted on a hollow shaft which extends coaxially through the drum. The hollow shaft has a number of jets fixed at spaced apart locations along the length of the shaft within the drum, so that cooling fluid pumped through the shaft is sprayed onto the inner wall of the rotating drum. Preferably the shaft is mounted horizontally.

The jets preferably each have an internal cylindrical cavity into which cooling liquid is fed tangentially at a high velocity. The cooling fluid is thus swirled around the cavity before flowing out of the jet orifice. The energy imparted into the cooling fluid causes the surface tension to break down and the cooling fluid is discharged as a mist of fine particles. Further the rapid expansion of the cooling fluid in the form of fine particles also results in partial vapourisation and this provides a further cooling effect due to the subsequent absorption of the heat of vapourisation. Preferably the jet has a groove formed across the jet orifice so that the pattern of the discharge is in the form of a flattened cone or fan.

Whilst the cooling fluid can be collected in the lower half of the rotating drum and allowed to flow away via another part of the hollow shaft, it has been found that further performance is obtained by using a pump to positively pump the water away.

The present invention will now be further described, by way of example, with reference to the accompanying drawings, in which:-

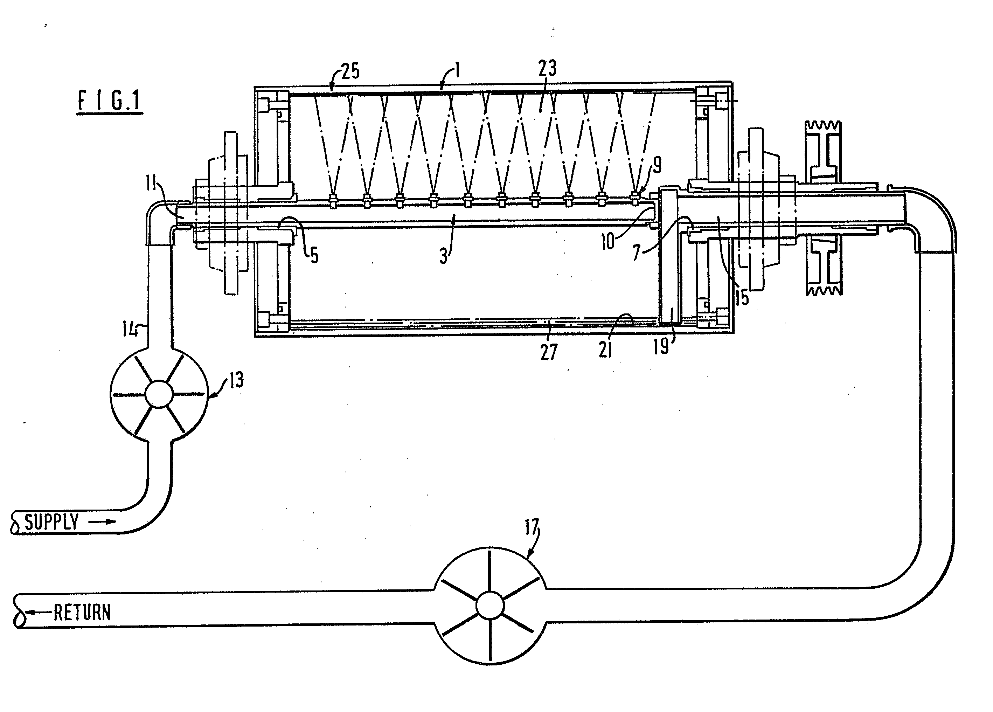

Fig. 1 is a cross-sectional view of one embodiment of cooling drum for use in the present invention;

Fig. 2 is a longitudinal cross-sectional view of a preferred form of jet for use in the embodiment of Fig. 1;

Fig. 3 illustrates the groove and swirl cavity configuration; and

Fig. 4 is a plan view of the jet of Fig. 2.

Referring to the accompanying drawings, a hollow, cylindrical cooling drum 1 is rotatably mounted on hollow shaft 3 by means of bearings 5 and 7. The shaft 3 is fixed and arranged horizontally with a series of atomising jets 9 mounted in the upper part of the shaft wall at spaced apart locations along the length of the shaft within the drum 1. Whilst the shaft is hollow it is closed at 10 so that the opposite end regions are isolated from each other. One end 11 of the shaft 3 is fed with cooling water by means of a booster pump 13 and supply pipe 14 and the other end region 15 of shaft 3 is connected to a scavenging pump 17. A vertical scavenging pipe 19 extends from said other end region 15 of shaft 3 to a point adjacent to the inner wall 21 of the drum 1. As the drum rotates via a belt drive (not shown) and pulley 18, the scavenging pipe 19 remains in its illustrated position and thus the drum can be maintained almost empty of residual water, residual water being removed via scavenging pipe 19 and scavenging pump 17.

Water passing through the jets 9 is atomised and projected in a conical shaped stream 23 at high velocity towards the inner wall surface 21 of the cooling drum 1. The atomising jets 9 are placed along shaft 3 in such positions that the conical shaped streams of atomised water 23 overlap at the point where they impinge on the inner surface 21 of the cooling drum 1.  The particles of water pass through the boundary layer 25 of water to contact the inner surface 21 of the drum 1, the hot water displaced from the boundary layer 25 falling to the bottom of the drum as viewed in the accompanying drawings, and collecting in a pool 27 whence it is pumped out through the scavenging pipe 19 by the pump 17, and returned to the cooling water supply system (not shown).

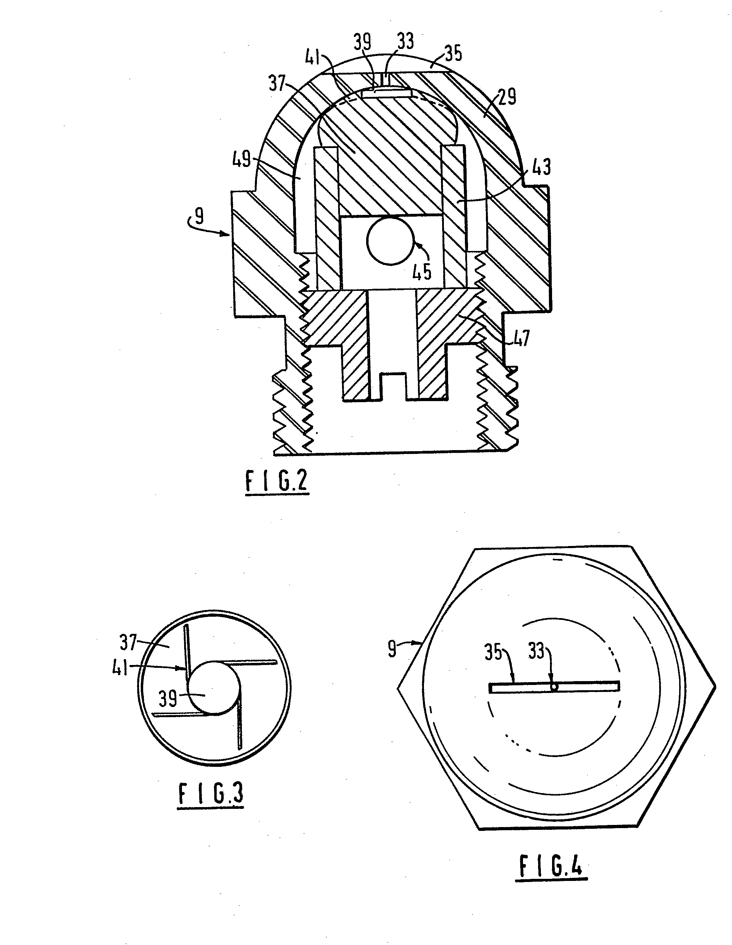

Experiments have been conducted with different types of atomising jets and the preferred type is the pressure jet with internal swirl cup as shown in Figs. 2, 3 and 4.  Each jet 9 comprises an outer body 29 at one end of which is a screw thread 31 for attaching the jet to shaft 3.  On the opposite end is a discharge orifice 33 which leads into a slot 35 which causes the atomised water to discharge in the shape of a fan. Fitted inside the body 29 is the swirl cup 37.  In the end of the swirl cup 37 there is a small cylindrical cavity 39 and leading into the cylindrical cavity are a number of grooves 41 which enter the cavity 39 at a tangent.  The swirl cup 37 is supported by means of a tube 43 through the side of which a feed port 45 extends. The swirl cup 37 and support tube 43 are fixed in position inside the body 24 by means of a screw 47 which has a hollow centre to permit the entry of water or cooling fluid.

In operation cooling fluid flows under pressure through the hollow centre of screw 47 and into the support tube 43 whereon it flows through the port 45 and into

0164912

the annular space 49. The fluid then enters the grooves 41 where because of the restriction in volume the velocity increases before emerging into the cylindrical cavity 39. By virtue of the high velocity of the fluid entering at a tangent, the cooling fluid swirls round inside the cavity 39 before flowing out of the orifice 33. The energy imparted into the cooling fluid causes the surface tension to break down and the stream of cooling fluid is dicharged as a mist of fine particles. Further, the rapid expansion of the cooling fluid in the form of fine particles also results in partial vapourization and this provides a further cooling effect because of the absorption of the heat of vapourization.

By fitting a restrictor valve (not shown) into the supply pipe 14, it is possible to operate the jets 9 at varying pressures. It has been found that with a pressure of 6 kg/sq.cm$^2$ a marked increase in cooling efficiency occurs and there is no advantage to be gained by using pressures in excess of 10 kg/sq.cm$^2$.

Although it has not been possible to measure the velocity of atomised water, calculations based on the flow of water and the cross sectional area of the jet indicate a speed of 60 metres per second at 6 kg/sq.cm$^2$ and 100 metres per second at 10 kg/sq.cm$^2$.

When the scavenging pump 17 is switched off, it has been found that the level of water in the drum 1 rises to approximately the centre line and a reduced efficiency has been noted. Efficiency was compared by measuring the surface temperature of the drum and temperature rise of the cooling water when operated with a constant mass of film being produced and the volume of cooling water being constant.

A practical demonstration of the benefits of the present invention has been provided by experiments conducted with a conventional film extrusion line, comprising:-    Extruder, Film Die, and Cooling Drum producing polypropylene film 150 microns thick by one metre wide.  The standard cooling drum on the machine was of hollow construction and water was circulated through  the drum by means  of a pump with a capacity of 100 litres per minute.  The temperature of the cooling water entering the drum was 10 degrees centigrade.

By gradually increasing the rate of the extrusion it was observed that at a rate of 150 kgs. per hour the temperature of the surface of the drum had increased until the film began to stick to the drum and cause the process to break down.

In an attempt to increase the rate of production, the pump supplying water into the cooling drum was replaced by a pump with a capacity of 200 litres per minute and the experiment repeated.  It was found however, that there was no increase in the rate of production before the film started sticking to the drum.

The drum was then replaced by another of identical dimensions but constructed according to the present invention.  The pump supplying the water for cooling the drum had a capacity of 100 litres per minute and developed a pressure of 10 kgs per square centimetre. A second pump was fitted to the outlet from the drum. This pump had a capacity of 150 litres per minute. The water supply was the same as that used in the first two experiments, i.e. a temperature of 10 degrees centigrade.

When the experiment was repeated it was found that the production rate could be increased to 250 kgs per hour and at that rate of production there was no evidence of the film sticking to the surface of the drum. However, it was not possible to ascertain the maximum output attainable as at 250 kgs per hour the extruder used for the experiment was running at maximum
capacity.

Thus, the present invention provides a simple but
extremely advantageous method and apparatus for
cooling purposes in the production of plastics sheet
or film.

## CLAIMS

1. A method of cooling plastics material, for use in the production of plastics film and sheet, said method being characterised by the steps of casting molten plastics material onto a hollow rotating drum (1) wherein cooling fluid is atomised and sprayed onto the inside wall (21) of the hollow drum (1).

2. A method as claimed in claim 1, in which the atomised cooling fluid is sprayed at approximately 90° to the inner surface (21) of the drum (1).

3. A method as claimed in claim 1 or claim 2, in which the cooling fluid which collects in the drum (1) is continuously pumped out of the drum (1).

4. A cooling drum for use in the production of plastics film and sheet, characterised in that said drum (1) is cylindrical and mounted for rotation about its longitudinal axis, spraying means (3,9) provided within the drum (1) being adapted to atomise and spray cooling fluid on the inside wall (21) of the rotatable drum (1).

5. A cooling drum as claimed in claim 4, in which the hollow drum (1) is rotatably mounted on a hollow shaft (3) which extends coaxially within the drum (1), the shaft (3) having a number of jets (9) forming said spraying means, the jets (9) being fixed at spaced apart locations along the length of the shaft (3) within the drum (1).

6. A cooling drum as claimed in claim 4 or 5, in which the scavenging pump (17) is arranged to continuously pump cooling fluid out of the drum (1).

7. A cooling drum as claimed in claim 5, in which the hollow shaft (3) is closed off towards one end region thereof by a dividing wall (10), the other end region of the shaft (3) being connected to a feed

0164912

pump (13) for supplying cooling fluid, and said one region of the shaft (3) having a lateral extension (19) which extends towards the inside wall (21) of the drum (1), said one end region of the shaft (3) being also connected to a scavenging pump (17).

8. A cooling drum as claimed in any one of claims 4 to 7, in which the spraying means takes the form of jets (9) adapted to atomise the cooling fluid and arranged to spray cooling fluid at approximately 90° to the inside wall (21) of the drum (1).

9. A cooling drum as claimed in claim 5 or any one of claims 6 to 9 when dependent upon claim 5, in which the hollow shaft (3) is arranged horizontally.

10. A cooling drum as claimed in claim 7, in which the hollow shaft (3) is arranged horizontally with said lateral extension (19) extending downwards and the spraying means (9) arranged to spray upwards with respect to said hollow shaft (3).

FIG.1

SUPPLY →

← RETURN

F I G.2

F I G.3

F I G.4